(19) Europäisches Patentamt
European Patent Office
Office européen des brevets

(11) **EP 3 843 187 A1**

(12) **EUROPÄISCHE PATENTANMELDUNG**

(43) Veröffentlichungstag:
**30.06.2021 Patentblatt 2021/26**

(21) Anmeldenummer: **19219567.5**

(22) Anmeldetag: **23.12.2019**

(51) Int Cl.:
*H01M 6/04* (2006.01)  *H01M 6/12* (2006.01)
*H01M 6/40* (2006.01)  *H01M 4/24* (2006.01)
*H01M 4/26* (2006.01)  *H01M 4/34* (2006.01)
*H01M 4/38* (2006.01)  *H01M 4/42* (2006.01)
*H01M 4/50* (2010.01)  *H01M 4/54* (2006.01)
*H01M 4/62* (2006.01)  *H01M 4/66* (2006.01)
*G06K 19/07* (2006.01)  *G06K 19/077* (2006.01)
*G06Q 10/08* (2012.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(71) Anmelder:
• **VARTA Microbattery GmbH
73479 Ellwangen Jagst (DE)**
• **Elmeric GmbH
72414 Rangendingen (DE)**

• **Bayer Aktiengesellschaft
51373 Leverkusen (DE)**

(72) Erfinder:
• **Fink, Werner
72414 Rangendingen (DE)**
• **Krebs, Martin
73494 Rosenberg (DE)**
• **Lang, Sabrina
72119 Ammerbuch (DE)**

(74) Vertreter: **Patentanwaltskanzlei Cartagena
Partnerschaftsgesellschaft Klement, Eberle mbB
Urbanstraße 53
70182 Stuttgart (DE)**

(54) **GEDRUCKTE BATTERIE, FUNKETIKETT UND HERSTELLUNGSVERFAHREN**

(57) Eine gedruckte Batterie (100) umfasst einen von einem Gehäuse (109) umschlossenen Schichtstapel (108) aus einer zinkhaltigen Anode (101), einer Kathode (102) auf Basis eines Metalloxids wie z.B. Manganoxid und aus einem dazwischen angeordneten Separator (103). Letzterer umfasst eine erste Seite (103a) und eine zweite Seite (103b), von denen die erste Seite (103a) eine erste Kontaktfläche zur Anode (101) und die zweite Seite (103b) parallel dazu eine zweite Kontaktfläche zur Kathode (102) umfasst. Die Kontaktflächen überlagern dabei einander in Blickrichtung senkrecht zu dem als Schicht ausgebildeten Separator (103) in einem Überlagerungsbereich A, in welcher eine Gerade senkrecht zu dem Separator (103) beide Kontaktflächen schneidet. Damit sie sich zur Versorgung einer Sende- und/oder Empfangseinheit (111) eines Funketiketts (110) mit einem elektrischen Strom von in der Spitze ≥ 400 mA eignet, enthält die Kathode (102), jeweils bezogen auf das Gesamtgewicht ihrer festen Bestandteile, das Metalloxid in einem Anteil von 10 Gew.-% bis 90 Gew.-%, ein elastisches Bindemittel oder Bindemittelgemisch in einem Anteil von 1 Gew.-% bis 25 Gew.-% und mindestens ein Leitfähigkeitsadditiv in einem Anteil von 2,5 Gew.-% bis 35 Gew.-%. Zugleich muss der Überlagerungsbereich A eine Mindestgröße von 17,3 cm$^2$ aufweisen. Beschrieben werden neben der Batterie (100) auch ein damit ausgestattetes Funketikett (110) sowie ein Verfahren zur Herstellung der Batterie (100).

*Fig. 1*

**Beschreibung**

Die nachfolgend beschriebene Erfindung betrifft eine gedruckte Batterie und ein Funketikett, das von der Batterie mit elektrischem Strom versorgt wird. Weiterhin betrifft die Erfindung ein Verfahren zur Herstellung der Batterie.

Funketiketten können zur Verfolgung von Produkten aller Art dienen, beispielsweise von Pharmazeutika und von Pflanzenschutzmitteln. Solche Funketiketten sind beispielsweise in der WO 2019/145224 A1 beschrieben. Sie umfassen in der Regel eine Energieversorgungseinheit, mindestens einen Sensor, eine Steuereinheit, einen Datenspeicher, in dem eine eindeutige Produktkennung gespeichert ist, und eine Sende- und/oder Empfangseinheit. Mit Hilfe des Sensors kann eine Zustandsinformation betreffend das Produkt ermittelt werden, beispielsweise betreffend den Öffnungszustand seiner Verpackung. Die Steuereinheit kann dann die Sende- und/oder Empfangseinheit dazu veranlassen, die Zustandsinformation und die Produktkennung an einen Datenempfänger zu senden. Idealerweise sollte die Energieversorgungseinheit die hierfür benötigte Energie über einen Zeitraum von mehreren Monaten liefern können, wobei über diesen Zeitraum mindestens 50 eingehende und abgehende Datenübertragungen möglich sein sollten.

Bei der Sende- und/oder Empfangseinheit kann es sich grundsätzlich um eine beliebige Datenübertragungseinrichtung handeln, beispielsweise sind Datenübertragungen nach dem Wi-Fi Standard (IEEE 802.11) und dem Bluetooth Standard (IEEE 802.15.1) möglich. Um eine weltweite Verfolgung von Produkten zu gewährleisten, ist es allerdings zweckmäßig, für die Datenübertragung Mobilfunknetze oder andere bestehende Funknetzwerke zu nutzen.

Mobilfunknetze decken heute weite Teile der bewohnten Welt ab, sie sind daher für die weltweite Verfolgung von Produkten besonders gut geeignet. Mobilfunkchips stellen hinsichtlich ihres Energieverbrauchs allerdings immer noch hohe Anforderungen. Dies gilt auch für Mobilfunkchips neuerer Generation, die nach dem LTE-Standard (LTE = Long Term Evolution) funken. In Abhängigkeit des gewählten Funkprotokolls müssen zumindest für kurze Zeitfenster Peakströme von bis zu 400 mA zur Verfügung stehen.

Für einen universellen Einsatz müssen Funketiketten und damit auch ihre Energieversorgungseinheiten möglichst klein und günstig herzustellen sein. Darüber hinaus sind Umweltverträglichkeit und Sicherheit für alle Produkte im Masseneinsatz ein wichtiger Parameter. Unter anderem aus diesen Gründen werden in der WO 2019/145224 A1 gedruckte Batterien als Energieversorgungseinheiten in Erwägung gezogen.

Die bislang bekannten gedruckten Batterien genügen den oben skizzierten Anforderungen allerdings nicht oder allenfalls teilweise. So sind beispielsweise die in der US 2010/081049 A1 beschriebenen Batterien nicht dazu in der Lage, einen Peakstrom der genannten Größenordnung zu liefern. Sämtliche lithiumbasierten Systeme scheiden wegen ihres brennbaren Elektrolyten aus Sicherheitsgründen aus. Nickel-Metallhydrid-Batterien sind aus drucktechnischen Gründen problematisch.

Der vorliegend beschriebenen Erfindung lag die Aufgabe zugrunde, eine Energieversorgungseinheit bereitzustellen, die speziell für die Versorgung der Sende- und/oder Empfangseinheiten von Funketiketten optimiert ist, insbesondere auch für Sende- und/oder Empfangseinheiten, die nach dem LTE-Standard arbeiten.

Zur Lösung dieser Aufgabe schlägt die Erfindung die Batterie mit den in Anspruch 1 genannten Merkmalen sowie das Verfahren mit den Merkmalen des Anspruchs 12 vor. Auch das Funketikett mit den Merkmalen des Anspruchs 11 ist Gegenstand der Erfindung. Weiterbildungen der Erfindung sind Gegenstand von Unteransprüchen.

Der Begriff "Batterie" meinte ursprünglich mehrere in Serie geschaltete elektrochemische Zellen. Heute wird der Begriff "Batterie" allerdings breiter verwendet und umfasst oft auch einzelne elektrochemische Zellen (Einzelzellen). So wird dies auch im Rahmen der vorliegenden Anmeldung gehandhabt. Bei der erfindungsgemäßen Batterie kann es sich also sowohl um eine Einzelzelle mit nur einer Anode und eine Kathode handeln als auch um einen Verbund aus mehreren elektrochemischen Zellen.

In Übereinstimmung mit der der Erfindung zugrunde liegenden Aufgabe dient die erfindungsgemäße gedruckte Batterie bevorzugt zur Versorgung einer Sende- und/oder Empfangseinheit mit einem elektrischen Strom von in der Spitze ≥ 400 mA. Sie kann daher unter anderen nach dem LTE-Standard arbeitende Mobilfunkchips mit elektrischer Energie versorgen. Grundsätzlich ist sie aber auch für andere Anwendungen geeignet.

Die Batterie weist stets die folgenden Merkmale a. bis e. auf:

a. Sie umfasst einen Schichtstapel mit

• einer als Schicht ausgebildeten Anode, die in vorzugsweise homogener Durchmischung als Elektrodenaktivmaterial partikuläres metallisches Zink oder eine partikuläre metallische Zinklegierung und ein erstes elastisches Bindemittel oder Bindemittelgemisch enthält, und

• einer als Schicht ausgebildeten Kathode, die bevorzugt in homogener Durchmischung als Elektrodenaktivmaterial ein partikuläres Metalloxid, mindestens ein Leitfähigkeitsadditiv zur Optimierung der elektrischen Leitfähigkeit der Kathode, und ein zweites elastisches Bindemittel oder Bindemittelgemisch enthält, und

- einem als Schicht ausgebildeten Separator, der die Anode und die Kathode elektrisch voneinander isoliert, und

b. sie umfasst einen ersten elektrischen Leiter, der mit der Anode in unmittelbarem Kontakt steht, sowie einen zweiten elektrischen Leiter, der mit der Kathode in unmittelbarem Kontakt steht, und

c. sie umfasst ein Gehäuse, das den Schichtstapel umschließt, wobei

d. der Separator zwischen der Anode und der Kathode angeordnet ist und eine erste und eine zweite Seite umfasst, von denen die erste Seite eine erste Kontaktfläche zur Anode und die zweite Seite parallel dazu eine zweite Kontaktfläche zur Kathode umfasst, und

e. die Kontaktflächen einander in Blickrichtung senkrecht zu dem als Schicht ausgebildeten Separator in einem Überlagerungsbereich A, in welcher eine Gerade senkrecht zu dem Separator beide Kontaktflächen schneiden, überlagern.

Unter einer gedruckten Batterie soll vorliegend eine Batterie verstanden werden, bei der zumindest die Elektroden und die elektrischen Leiter, in einigen bevorzugten Ausführungsformen auch der Separator und gegebenenfalls weitere Funktionsteile, durch Drucken einer Druckpaste auf einen Träger, insbesondere mittels eines Siebdruckverfahrens, gebildet sind. Bei der erfindungsgemäßen Batterie sind also zumindest die zinkhaltige Anode, die metalloxidhaltige Kathode und der erste und der zweite elektrische Leiter gedruckt.

Die Anode und die Kathode weisen jeweils bevorzugt eine Dicke im Bereich von 10 $\mu$m bis 250 $\mu$m auf.

Die Wahl eines elektrochemischen Systems mit einer zinkhaltigen Anode ist vor allem der geforderten Sicherheit geschuldet. Systeme mit zinkbasierten Anoden benötigen einen wässrigen Elektrolyten und sind damit nicht brennbar. Darüber hinaus ist Zink umweltverträglich und billig.

Die gestapelte Anordnung der Elektroden und des Separators hat sich gegenüber einer koplanaren Anordnung wie im Falle der Elektroden der in der US 2010/081049 A1 beschriebenen Zelle als überlegen erwiesen. Die Strombelastbarkeit von Zellen mit gestapelten Elektroden ist deutlich höher, da die Ionen, die bei Lade- und Entladevorgängen zwischen den Elektroden hin- und herwandern, im Mittel deutlich kürzere Wege zurücklegen müssen. Im Bereich des Überlagerungsbereichs entspricht die kürzeste Entfernung zwischen den Elektroden der Dicke des zwischen der Anode und der Kathode angeordneten Separators.

Bei identischer Größe und nicht versetzter Anordnung der Anode und der Kathode innerhalb des Stapels entspricht die Größe des Überlagerungsbereichs exakt der Größe der Elektroden.

Die stapelförmige Anordnung ist allerdings für sich gesehen noch nicht ausreichend, um der erfindungsgemäßen Batterie mit der zinkhaltigen Anode die geforderte Strombelastbarkeit zu verleihen. Vielmehr zeichnet sich die Batterie zu diesem Zweck durch eine Kombination der folgenden zusätzlichen Merkmale f. bis i. aus:

f. Der Überlagerungsbereich A weist eine Mindestgröße von 17,3 cm$^2$ auf.

g. Die Kathode enthält das partikuläre Metalloxid, bezogen auf das Gesamtgewicht der festen Bestandteile der Kathode, in einem Anteil von 10 Gew.-% bis 90 Gew.-%, und

h. Die Kathode enthält das zweite elastische Bindemittel oder Bindemittelgemisch, bezogen auf das Gesamtgewicht der festen Bestandteile der Kathode, in einem Anteil von 1 Gew.-% bis 25 Gew.-%, und

i. Die Kathode enthält das mindestens eine Leitfähigkeitsadditiv, bezogen auf das Gesamtgewicht der festen Bestandteile der Kathode, in einem Anteil von 1 Gew.-% bis 85 Gew.-%.

Um der erfindungsgemäßen Batterie die geforderte Strombelastbarkeit zu verleihen, ist es also erforderlich, dass der Überlagerungsbereich eine definierte Mindestgröße aufweist, die wiederum abhängt von der Zusammensetzung der Kathode. Deren Komponenten, das partikuläre Metalloxid, das zweite elastische Bindemittel oder Bindemittelgemisch und das mindestens eine Leitfähigkeitsadditiv müssen innerhalb festgelegter Anteilsbereiche in der Kathode enthalten sein.

Der Überlagerungsbereich A weist bevorzugt eine Maximalgröße von 500 cm$^2$, besonders bevorzugt von 100 cm$^2$, auf.

Grundsätzlich beziehen sich alle prozentualen Angaben zu Gewichtsanteilen von Komponenten in Elektroden in der vorliegenden Anmeldung auf das Gesamtgewicht der festen Bestandteile der jeweiligen Elektrode. Die Gewichtsanteile der jeweils beteiligten Komponenten ergänzen sich dabei auf 100 Gew.-%. Vor ihrer Ermittlung ist gegebenenfalls in der Elektroden enthaltene Feuchtigkeit zu entfernen.

Der Anteil an dem zweiten elastischen Bindemittel oder Bindemittelgemisch muss mindestens 1 Gew.-% betragen, da es die in der Kathode enthaltenen Metalloxidpartikel relativ zueinanderfixieren und der Kathode gleichzeitig eine gewisse Flexibilität verleihen soll. Der Anteil darf den oben genannten Maximalanteil aber nicht überschreiten, das ansonsten die Gefahr besteht, dass die Metalloxidpartikel zumindest teilweise nicht mehr in Kontakt zueinander stehen. Innerhalb des oben genannten Bereiches ist ein Anteil im Bereich von 1 Gew.-% bis 15 Gew.-%, besonders bevorzugt in einem Anteil von 5 Gew.-% bis 15 Gew.-%, weiter bevorzugt.

Die Anteile an dem partikulären Metalloxid und dem mindestens einen Leitfähigkeitsadditiv bedingen sich gegenseitig. Je näher sich der Anteil an dem mindestens einen Leitfähigkeitsadditiv an der genannten Untergrenze bewegt, desto höher ist vorzugsweise der Anteil an dem partikulären Metalloxid. Umgekehrt gilt das Gleiche.

Innerhalb des oben für das partikuläre Metalloxid genannten Bereiches ist ein Anteil im Bereich von 50 Gew.-% bis 90 Gew.-% weiter bevorzugt.

Innerhalb des oben für das mindestens eine Leitfähigkeitsadditiv genannten Bereiches ist ein Anteil im Bereich von 2,5 Gew.-% bis 35 Gew.-% weiter bevorzugt.

Weiterhin bedingen sich vorzugsweise auch die Größe des Überlagerungsbereichs A und der Gesamtanteil G des partikulären Metalloxids und des mindestens einen Leitfähigkeitsadditivs in der Kathode. Je näher sich die Größe des Überlagerungsbereichs an der genannten Untergrenze bewegt, desto höher ist vorzugsweise der Gesamtanteil G. Umgekehrt gilt das Gleiche.

In bevorzugten Weiterbildungen zeichnet sich die Batterie durch mindestens eines der unmittelbar folgenden zusätzlichen Merkmale a. bis c. aus:

a. Der Gesamtanteil G des partikulären Metalloxids und des mindestens einen Leitfähigkeitsadditivs in der Kathode liegt im Bereich des 0,85- bis 0,95-fachen des Gesamtgewichts der festen Bestandteile der Kathode.

b. Das Verhältnis des Gewichtsanteils des partikulären Metalloxids zum Gewichtsanteil des mindestens einen Leitfähigkeitsadditivs in der Kathode liegt im Bereich von 20:1 bis 5:1.

c. Für das Verhältnis der Größe des Überlagerungsbereichs A [cm²] zum Gesamtanteils G gilt die folgende Bedingung:

$$x\,[cm^2] * 0{,}95 \leq A\,[cm^2] * G$$

In besonders bevorzugten Ausführungsformen der Batterie sind die unmittelbar vorstehenden Merkmale a. bis c. in Kombination miteinander realisiert.

Ein hoher Anteil des Metalloxids in der Kathode erhöht die Kapazität der Batterie. Für die Strombelastbarkeit ist der Anteil des mindestens einen Leitfähigkeitsadditivs jedoch von größerer Bedeutung als der Gesamtanteil des Metalloxids.

Betreffend die Wahl eines geeigneten Leitfähigkeitsadditivs stehen im Rahmen der Erfindung zwei besonders bevorzugte Varianten zur Auswahl.

In einer ersten besonders bevorzugten Variante zeichnet sich die Batterie durch mindestens eines der unmittelbar folgenden zusätzlichen Merkmale a. und b. aus:

a. Die Kathode enthält als Leitfähigkeitsadditiv mindestens ein kohlenstoffbasiertes Material, insbesondere aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs).

b. Die Kathode enthält das mindestens eine kohlenstoffbasierte Material in einem Anteil im Bereich von 25 Gew.-% bis 35 Gew.-% (s.o.).

In besonders bevorzugten Ausführungsformen der Batterie sind die unmittelbar vorstehenden Merkmale a. und b. in Kombination miteinander realisiert.

In dieser Variante macht man sich zu Nutzen, dass die angegebenen Leitfähigkeitsadditive nicht nur die elektrische Leitfähigkeit der Kathode erhöhen, vielmehr können sie der Kathode zusätzlich zu ihrer Faradayschen Kapazität eine Doppelschichtkapazität verleihen. Somit können für kurze Zeiträume sehr große Ströme zur Verfügung gestellt werden.

Überraschenderweise hat sich herausgestellt, dass sich ein ähnlich positiver Effekt erzielen lässt, indem der Kathode bei ihrer Herstellung über die Elektrodenpaste Leitsalze zugefügt werden, die beim Trocknen der Kathode in der Kathode kristallisieren können. Bei einem späteren Aufdrucken des Elektrolyten können die kristallinen Leitsalze sehr schnell benetzt werden und führen zu einer besseren Durchdringung der Elektroden mit einer ionenleitenden Flüssigkeit.

Entsprechend zeichnet sich die Batterie In einer zweiten besonders bevorzugten Variante durch mindestens eines der unmittelbar folgenden zusätzlichen Merkmale a. und b. aus:

> a. Die Kathode enthält als Leitfähigkeitsadditiv mindestens ein wasserlösliches Salz.
> b. Die Kathode enthält das mindestens eine wasserlösliche Salz in einem Anteil im Bereich von 1 Gew.-% bis 25 Gew.-%.

In besonders bevorzugten Ausführungsformen der Batterie sind die unmittelbar vorstehenden Merkmale a. und b. in Kombination miteinander realisiert.

Als wasserlösliches Salz können der Kathode zum Zwecke der Verbesserung der elektrischen Leitfähigkeit insbesondere Halogenide zugesetzt werden, bevorzugt Chloride, insbesondere Zinkchlorid und/oderAmmoniumchlorid.

In einigen bevorzugten Ausführungsformen können die angeführten Varianten auch kombiniert werden. In diesen Fällen zeichnet sich die Batterie durch eine Kombination der unmittelbar folgenden Merkmale a. und b. aus:

> a. Die Kathode enthältals erstes Leitfähigkeitsadditiv das mindestens eine kohlenstoffbasierte Material, insbesondere aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs).
>
> b. Die Kathode enthält als zweites Leitfähigkeitsadditiv das mindestens eine wasserlösliche Salz.

In bevorzugten Ausführungsformen der Batterie zeichnet sich die Batterie durch eines der unmittelbarfolgenden Merkmale a. und b. aus:

> a. Die Kathode enthält als partikuläres Metalloxid Manganoxid.
>
> b. Die Kathode enthält als partikuläres Metalloxid Silberoxid.

Bei der erfindungsgemäßen Batterie handelt es sich also bevorzugt um eine Zink / Manganoxid - oder um eine Zink / Silberoxid - Batterie.

In weiteren bevorzugten Ausführungsformen zeichnet sich die Batterie durch mindestens eines der unmittelbar folgenden zusätzlichen Merkmale a. bis c. aus:

> a. Die Anode enthält als erstes elastisches Bindemittel oder Bindemittelgemisch mindestens ein Mitglied aus der Gruppe mit Cellulose und deren Derivate, insbesondere Carboxymethylzellulose (CMC), Polyacrylate (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.
>
> b. Die Kathode enthält als zweites elastisches Bindemittel oder Bindemittelgemisch mindestens ein Mitglied aus der Gruppe mit Cellulose und deren Derivate, insbesondere Carboxymethylzellulose (CMC), Polyacrylate (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.
>
> c. Das erste und das zweite elastische Bindemittel oder Bindemittelgemisch sind stofflich identisch.

In besonders bevorzugten Ausführungsformen der Batterie sind die unmittelbar vorstehenden Merkmale a. und b. in Kombination miteinander realisiert. In einigen Weiterbildungen dieser besonders bevorzugten Ausführungsformen sind die unmittelbar vorstehenden Merkmale a. bis c. in Kombination miteinander realisiert.

Besonders bevorzugt sind sowohl in der Kathode als auch in der Anode als Bindemittel oder Bindemittelgemisch eine Kombination aus einem als Elektrodenbinder geeigneten Zellulosederivat und SBR enthalten. Beispielsweise können die Anode und die Kathode 0,5 Gew.-% bis 2,5 Gew.% Carboxymethylzellulose und 5 Gew.-% bis 10 Gew.-% SBR enthalten.

Die Anode der erfindungsgemäßen Batterie enthält das erste elastische Bindemittel oder Bindemittelgemisch, bezogen auf das Gesamtgewicht ihrer festen Bestandteile, in einem Anteil von 1 Gew.-% bis 25 Gew.-%.

Das partikuläre metallische Zink oder die partikuläre metallische Zinklegierung ist in der Anode bevorzugt in einem Anteil im Bereich von 40 Gew.-% bis 80 Gew.-% enthalten.

Gegebenenfalls kann auch die Anode einen Anteil an einem Leitfähigkeitsadditiv enthalten. Da das Aktivmaterial der Anode allerdings bereits von sich aus elektrisch leitfähig ist, ist das nicht zwingend erforderlich.

In einer besonders bevorzugten Ausführungsform zeichnet sich die Batterie durch die Kombination der vier unmittelbar folgenden zusätzlichen Merkmale a. bis d. aus:

a. Die Kathode enthält als partikuläres Metalloxid ein Metalloxid aus der Gruppe mit Manganoxid und Silberoxid.

b. Die Kathode enthält als Leitfähigkeitsadditiv mindestens ein wasserlösliches Salz.

c. Die Kathode enthält das mindestens eine wasserlösliche Salz in einem Anteil im Bereich von 1 Gew.-% bis 25 Gew.-%.

d. Die Kathode enthält als zweites elastisches Bindemittel oder Bindemittelgemisch eine Kombination aus Carboxymethylzellulose und SBR.

Es wurde eingangs bereits erwähnt, dass in einigen Ausführungsformen auch der Separator gedruckt werden kann. Geeignete Druckpasten hierfür sind beispielsweise der EP 2 561564 B1 zu entnehmen.

In weiteren Ausführungsformen kann es sich bei dem Separator aber auch um ein poröses Flächengebilde, beispielsweise eine poröse Folie oder ein Vlies, handeln, das zwischen der Anode und der Kathode angeordnet wird. Geeignete Flächengebilde und entsprechende Vorgehensweisen sind in der EP 3 477 727 A1 beschrieben.

Nicht zuletzt ist es möglich, dass zwischen den Elektrolyten ein Festelektrolyt angeordnet wird, wie er in einer bevorzugten Ausführungsform beispielsweise in der EP 2 960 967 B1 beschrieben ist, wobei Varianten, bei denen ein flüssiger Elektrolyt zum Einsatz kommen, in vielen Fällen aber bevorzugt sind.

Entsprechend zeichnet sich die erfindungsgemäße Batterie bevorzugt durch mindestens eines der unmittelbar folgenden zusätzlichen Merkmale a. und b. aus:

a. Sie umfasst einen wässrigen Elektrolyten, der ein chloridbasiertes Leitsalz enthält,

b. Der Separator, der zwischen der Anode und der Kathode angeordnet ist, ist mit dem Elektrolyten getränkt.

In besonders bevorzugten Ausführungsformen der Batterie sind die unmittelbar vorstehenden Merkmale a. und b. in Kombination miteinander realisiert.

Als chloridbasiertes Leitsalz sind insbesondere Zinkchlorid und Ammoniumchlorid geeignet. Es ist bevorzugt, dass sich der pH-Wert des wässrigen Elektrolyten im neutralen oder leicht sauren Bereich bewegt.

In einer weiteren bevorzugten Ausführungsform zeichnet sich die Batterie durch das folgende zusätzliche Merkmal a. aus:

a. Die Batterie umfasst als ersten und/oder als zweiten elektrischen Leiter eine Leiterbahn aus Metallpartikeln, insbesondere aus Silberpartikeln oder aus Partikeln aus einer Silberlegierung.

Druckbare Leitpasten mit Silberpartikeln zur Herstellung der elektrischen Leiter sind Stand der Technik und im Handel frei erhältlich.

Das erfindungsgemäße Funketikett umfasst auf einem Träger eine Sende- und/oder Empfangseinheit zum Senden und/oder Empfangen von Funksignalen sowie eine auf dem Träger angeordnete gedruckte Batterie zur Versorgung der Sende- und/oder Empfangseinheit mit einem elektrischen Strom von in der Spitze $\geq$ 400 mA, wobei die Batterie nach einem der vorhergehenden Ansprüche ausgebildet ist.

Zur Messung eines von einer Batterie lieferbaren Spitzenstroms wird bevorzugt die Impedanz der Batterie aus dem elektrochemischen Impedanzspektrum (EIS) hergeleitet. Bei diesem Messverfahren werden die Impedanzen Z als Funktion der Messfrequenz f bestimmt, Z = Z(f). Der Belastung durch einen Pulsstrom mit einer Länge von 1s entspricht der Impedanzwert Z(0,5Hz) am besten. Dieser wird mit der Spannungsdifferenz zwischen Ruhespannung und Schlussspannung der elektronischen Anwendung gemäß dem Ohmschen Gesetz verrechnet.

$$\text{Spitzenstrom } i = \text{Spannungsdifferenz } \Delta U / Z(0,5Hz)$$

Bevorzugt wurde die Batterie unmittelbar auf den Träger gedruckt. Es kann allerdings auch bevorzugt sein, die Batterie separatzu fertigen und auf dem Trägerzu fixieren, beispielsweise mittels eines Klebstoffs.

Bezüglich möglicher bevorzugter Ausgestaltungen des Funketiketts wird hiermit auf die WO 2019/145224 A1 verwiesen. Dort ist beispielsweise ausführlich eine Sensorik beschrieben, die Teil des Funketiketts sein kann und mit deren Hilfe Zustandsinformation zu einem Produkt, das mit dem Funketikett gelabelt ist, ermittelt werden können.

Im Rahmen der vorliegend beschriebenen Erfindung sind vor allem der Träger und dieSende- und/oder Empfangseinheit von Belang. Bei letzterer handelt es sich bevorzugt um einen Mobilfunkchip, wie er eingangs erwähnt ist, insbesondere um einen Chip, der Datenübertragungen nach dem LTE-Standard beherrscht.

Der Träger kann nahezu beliebig ausgestaltet sein. Wichtig ist nur, dass die Oberfläche, auf der die Leiter der erfindungsgemäßen Batterie gedruckt werden, keine elektrisch leitenden Eigenschaften aufweist um Kurzschlüsse oder Kriechströme auszuschließen. Beispielsweise kann der Träger ein Etikett auf Kunststoffbasis sein, geeignet wäre beispielsweise eine Folie aus einem Polyolefin oder aus Polyethylenterephthalat, das auf einer Seite eine Klebefläche aufweist, mit der es an einem Produkt fixiert werden kann. Auf die andere Seite können die elektrischen Leiter der Batterie sowie deren sonstigen Funktionsteile aufgebracht werden.

In besonders bevorzugten Ausführungsformen ist das Funketikett derart ausgestaltet sein, dass es elektrische Energie aus der Umgebung des Funketiketts gewinnen kann. Zu diesem Zweck kann das Funketikett mit einem Energiewandler ausgestattet sein, der dazu in der Lage ist, Energie aus der Umgebung in elektrische Energie umzuwandeln. Für die Umwandlung können beispielsweise der piezoelektrische Effekt, der thermoelektrische Effekt oder der photoelektrische Effekt genutzt werden. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und mit Hilfe des Energiewandlers genutzt oder "geerntet" werden.

Der Energiewandler ist in bevorzugten Ausführungsformen mit der erfindungsgemäßen Batterie gekoppelt, so dass er diese aufladen kann. Zwar gehören Zink / Manganoxid - oder Zink / Silberoxid - Batterien zu den sogenannten Primärbatterien, die grundsätzlich nicht fürAufladungen vorgesehen sind. In begrenztem Umfang funktioniert aber auch bei solchen Batterien eine Wiederaufladung.

Es wurde bereits darauf eingegangen, dass zumindest die wichtigsten Funktionsteiledererfindungsgemäßen Batterie mit Hilfe eines Druckverfahrens, insbesondere mittels Siebdruck, gebildet werden. Das erfindungsgemäße Verfahren dient der Herstellung einer Batterie wie der oben beschriebenen und zeichnet sich durch die unmittelbar folgenden Schritte a. bis e. aus:

a. Drucken eines ersten elektrischen Leiters auf einen elektrisch nicht leitenden Träger und eines zweiten elektrischen Leiters auf einen elektrisch nicht leitenden Träger.

b. Drucken einer Anode als Schicht unmittelbar auf den ersten elektrischen Leiter, wobei eine Druckpaste zum Einsatz kommt, die partikuläres metallisches Zink oder eine partikuläre metallische Zinklegierung und ein erstes elastisches Bindemittel oder Bindemittelgemisch enthält.

c. Drucken einer Kathode als Schicht unmittelbar auf den zweiten elektrischen Leiter, wobei eine Druckpaste zum Einsatz kommt, die ein partikuläres Metalloxid, mindestens ein Leitfähigkeitsadditiv zur Optimierung der elektrischen Leitfähigkeit der Kathode, und ein zweites elastisches Bindemittel oder Bindemittelgemisch enthält, wobei

• die Druckpaste das partikuläre Metalloxid, bezogen auf das Gesamtgewicht ihrer festen Bestandteile, in einem Anteil von 10 Gew.-% bis 90 Gew.-% enthält, und

• die Druckpaste das zweite elastische Bindemittel oder Bindemittelgemisch, bezogen auf das Gesamtgewicht ihrer festen Bestandteile, in einem Anteil von 1 Gew.-% bis 25 Gew.-%, bevorzugt in einem Anteil 1 Gew.-% bis 15 Gew.-%, besonders bevorzugt in einem Anteil von 5 Gew.-% bis 15 Gew.-%, und

• die Druckpaste das mindestens eine Leitfähigkeitsadditiv, bezogen auf das Gesamtgewicht ihrer festen Bestandteile, in einem Anteil von 1 Gew.-% bis 85 Gew.-%, bevorzugt in einem Anteil von 2,5 Gew.-% bis 35 Gew.-%, enthält.

d. Drucken oder Auflegen eines als Schicht ausgebildeten Separators auf die Anode und/oder die Kathode.

e. Bilden eines Schichtstapels mit der Sequenz Anode / Separator / Kathode, in dem

• der Separator zwischen der Anode und der Kathode angeordnet ist und eine erste und eine zweite Seite umfasst, von denen die erste Seite eine erste Kontaktfläche zur Anode und die zweite Seite parallel dazu eine zweite Kontaktfläche zur Kathode umfasst, und

- die Kontaktflächen einander in Blickrichtung senkrecht zu dem als Schicht ausgebildeten Separator in einem Überlagerungsbereich, in welcher eine Gerade senkrecht zu dem Separator beide Kontaktflächen schneidet, überlagern, und

- der Überlagerungsbereich A eine Mindestgröße von 17,3 cm$^2$ aufweist.

Zu bevorzugten Ausführungsformen betreffend die Auswahl und die Anteile des partikulären Metalloxids, des partikulären metallischen Zinks oder der partikulären metallischen Zinklegierung, des ersten und des zweiten elastischen Bindemittels oder Bindemittelgemischs und des mindestens einen Leitfähigkeitsadditivs zur Optimierung der elektrischen Leitfähigkeit wurde bei der Beschreibung der erfindungsgemäßen Batterie bereits Stellung genommen. Die dort beschriebenen bevorzugten Ausführungsformen gelten auch im Zusammenhang mit dem beschriebenen Herstellungsverfahren.

Analoges gilt für die Auswahl des Trägers und des Separators, auch diese wurden bei der Beschreibung der Batterie bereits näher spezifiziert.

Die Druckpasten enthalten neben den jeweiligen festen Bestandteilen bevorzugt auch ein flüchtiges Lösungs- bzw. Suspensionsmittel. Idealerweise handelt es sich dabei um Wasser.

Damit es bei Drucken keine Probleme gibt, enthalten die Druckpasten bevorzugt alle partikulären Bestandteile mit Partikelgrößen von maximal 50 μm.

Auf den Träger kann, neben die Batterie, in einem nachgeschalteten Schritt der Mobilfunkchip fixiert werden. Es kann daher zweckmäßig sein, beim Drucken der elektrischen Leiter für die Batterie auch gleich auch alle anderen elektrischen Verbindungen zum und vom Mobilfunkchip sowie gegebenenfalls auch eine mit dem Mobilfunkchip gekoppelte Antenne zu drucken.

In einer bevorzugten Ausführungsform des Verfahrens ist es durch mindestens einen der unmittelbar folgenden zusätzlichen Merkmale und / oder Schritte a. und b. gekennzeichnet:

a. Als partikuläres Metalloxid wird Manganoxid verwendet.

b. Der erste und/oder der zweite Leiter werden, bevor die Anode und die Kathode gedruckt werden, mit einer elektrisch leitenden Carbonschicht überdruckt.

In besonders bevorzugten Ausführungsformen des Verfahrens sind die unmittelbar vorstehenden Merkmale a. und b. in Kombination miteinander realisiert.

Die Carbonschicht dient dem Schutz des ersten und/oder des zweiten Leiters. Insbesondere, wenn der erste und/oder der zweite Leiter Silberpartikel umfassen, besteht die Gefahr, dass sich Silber im Elektrolyten löst und es zu einer Schwächung oder gar Zerstörung von Leiterbahnen kommt. Die Carbonschicht kann die Silberschicht vor einem unmittelbaren Kontakt mit dem Elektrolyten schützen.

In einer weiteren bevorzugten Ausführungsform des Verfahrens ist es durch mindestens einen der unmittelbar folgenden zusätzlichen Merkmale und / oder Schritte a. und b. gekennzeichnet:

a. Vor und/oder nach dem Drucken oder Auflegen des als Schicht ausgebildeten Separators werden die Anode und die Kathode mit einem flüssigen Elektrolyten getränkt.

b. Vor dem Tränken mit dem flüssigen Elektrolyten wird auf dem Träger ein Siegelrahmen gebildet oder angeordnet, der die Anode und die Kathode umschließt.

In besonders bevorzugten Ausführungsformen des Verfahre89ns sind die unmittelbar vorstehenden Merkmale a. und b. in Kombination miteinander realisiert.

Auf bevorzugte flüssige Elektrolyte wurde im Rahmen der Beschreibung der erfindungsgemäßen Batterie bereits Bezug genommen. Sofern als das mindestens eine Leitfähigkeitsadditiv eines der oben beschriebenen wasserlöslichen Salze eingesetzt wird, ist es gegebenenfalls ausreichend, zumindest die mit diesem Salz versetzte Elektrode lediglich mit Wasser zu tränken, da sich der flüssige Elektrolyt dann automatisch bildet.

Der Siegelrahmen sorgt dafür, dass auf die Elektroden aufgebrachte Flüssigkeit auf dem Träger nicht verläuft. Mögliche Ausführungsformen des Siegelrahmens und Varianten zu dessen Bildung sind aus der EP 3 477 727 A1 bekannt.

Bevorzugt wird der Siegelrahmen aus einer Klebstoffmasse gebildet, die gleichsam mit Hilfe eines Druckverfahrens applizierbar ist. Hierbei lässt sich grundsätzlich jeder Klebstoff verarbeiten, der gegenüber dem jeweils verwendeten Elektrolyten resistent ist und eine ausreichende Haftung zu dem Träger ausbilden kann. Insbesondere kann der Siegelrahmen auch aus einer gelösten Polymerzusammensetzung gebildet werden, zu deren Verfestigung enthaltenes Lösungsmittel entfernt werden muss.

Es ist auch möglich, den Siegelrahmen aus einer thermoaktivierbaren Folie, insbesondere eine Schmelzfolie, oder eine selbstklebende Folie, zu bilden.

In einer weiteren bevorzugten Ausführungsform des Verfahrens ist es durch mindestens einen der unmittelbar folgenden zusätzlichen Merkmale und / oder Schritte a. und b. gekennzeichnet:

a. Der erste und der zweite elektrische Leiter werden nebeneinander auf denselben Träger gedruckt.

b. Aus dem Träger wird nach dem Umschlagen durch Verschweißung und / oder Verklebung ein geschlossenes Behältnis gebildet, in dem der Schichtstapel angeordnet ist.

In besonders bevorzugten Ausführungsformen des Verfahrens sind die unmittelbar vorstehenden Merkmale a. und b. in Kombination miteinander realisiert.

Wie bereits angesprochen, wird bei einem Verfahren gemäß der Erfindung ein Schichtstapel mit der Sequenz Anode / Separator / Kathode gebildet. Dies kann bevorzugt dadurch erfolgen, dass die Elektroden nebeneinander, also in koplanarer Anordnung, auf den Träger gedruckt werden und der Träger derart umgeschlagen wird, dass die Anode und die Kathode sowie der dazwischen angeordnete Separator überlagern. Der Träger umschließt den entstandenen Schichtstapel nach dem Umschlagen von mindestens drei Seiten. Durch Verschweißung und/oder Verklebung der übrigen Seiten kann ein geschlossenes Behältnis gebildet werden. Eine Verklebung kommt insbesondere auch dann in Frage, wenn zuvor die Anode und die Kathode mit dem erwähnten Kleberahmen umgeben wurden. In diesem Fall kann der Siegelrahmen die Verklebung herbeiführen.

Weitere Merkmale der Erfindung sowie aus der Erfindung resultierende Vorteile ergeben sich aus den nachfolgenden Ausführungsbeispielen sowie den Zeichnungen, anhand derer die Erfindung erläutert wird. Die nachfolgend beschriebene Ausführungsform dient lediglich zur Erläuterung und zum besseren Verständnis der Erfindung und ist in keiner Weise einschränkend zu verstehen.

Ausführungsbeispiel

(1) Auf eine PET-Folie 104 mit einer Dicke von 200 $\mu$m wird mittels Siebdruck eine Stromableiterstruktur gedruckt, darunter der erste elektrische Leiter 105 und der zweite elektrische Leiter 106. Als Druckpaste dient hierbei eine handelsübliche Silberleitpaste.

(2) In einem weiteren Schritt wurde die Stromableiterstruktur mit einer dünnen Lage aus Kohlenstoffpartikeln abdeckt. Als Druckpaste diente hierbei eine typische Carbon-Paste, wie sie zur Bildung elektrisch leitfähiger Schichten und Verbindungen in der Elektronik verwendet wird.

(3) Anschließend werden zur Ausbildung einer Anode 101 und einer Kathode 102 der erste elektrische Leiter 105 mit einer Zinkpaste und der zweite elektrische Leiter 106 mit einer Manganoxidpaste überdruckt. Die Pasten weisen die folgenden Zusammensetzungen auf:

Zinkpaste:

| | |
|---|---|
| - Zinkpartikel | 70 Gew.-% |
| - CMC | 2 Gew.-% |
| - SBR | 6 Gew.-% |
| - Lösungsmittel (Wasser) | 22 Gew.-% |

Manganoxidpaste:

| | |
|---|---|
| - Manganoxid | 60 Gew.-% |
| - Graphit | 6 Gew.-% |
| - Zinkchlorid | 2 Gew.-% |
| - CMC | 2 Gew.-% |
| - SBR | 5 Gew.-% |
| - Lösungsmittel (Wasser) | 25 Gew.-% |

Die Anode 101 und die Kathode 102 belegen auf der PET-Folie 104 jeweils eine Fläche von 20 cm$^2$.

(4) In einem Folgeschritt wird die Anode 101 mit einem Separator 103 abgedeckt. Bei dem Separator 103 handelte es sich um einen handelsüblichen Vlies-Separator.

(5) In einem weiteren Folgeschritt werden die Anode 101 und die Kathode 102 sowie der Separator 103 mit einer wässrigen Zinkchlorid-Lösung bedruckt, nachdem auf die PET-Folie 104 mittels einer Klebstoffmasse ein Siegelrahmen 107 gebildet wurde, der die Anode 101 und die Kathode 102 umschließt.

(6) Abschließend wird die PET-Folie 104 entlang einer Knicklinie 104a umgeschlagen, so dass die Anode 101 und die Kathode102 sowie der dazwischen angeordnete Separator 103 einen Schichtstapel 108 bilden. Der Siegelrahmen 107 bildet zusammen mit der PET-Folie 104 ein geschlossenes Gehäuse 109.

Zeichnungen

In den Zeichnungen illustrieren schematisch

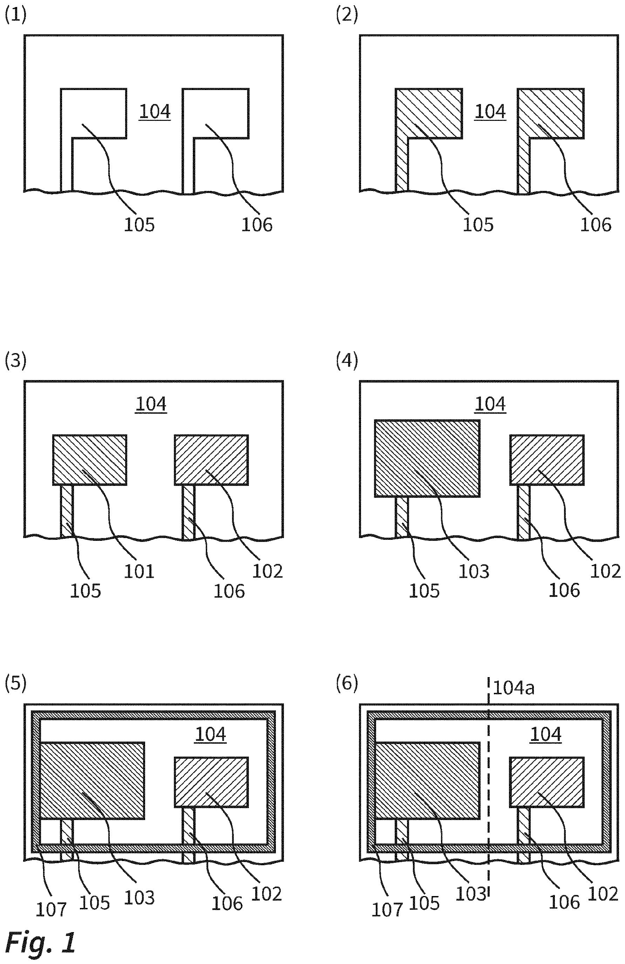

Fig. 1 eine Vorgehensweise gemäß dem Ausführungsbeispiel mit den obigen Schritten (1) bis (6), jeweils in einer Draufsicht senkrecht von oben,

Fig. 2 zeigt Querschnitt durch die gemäß der in Fig. 1 dargestellten Vorgehensweise gebildeten Batterie,

Fig. 3 ein Funketikett mit der in Fig. 2 dargestellten Batterie (Draufsicht von oben), und

Fig. 4 zwei Beispiele eines Schichtstapels einer erfindungsgemäßen Batterie (Draufsicht senkrecht von oben) mit unterschiedlich großen Überlagerungsbereichen.

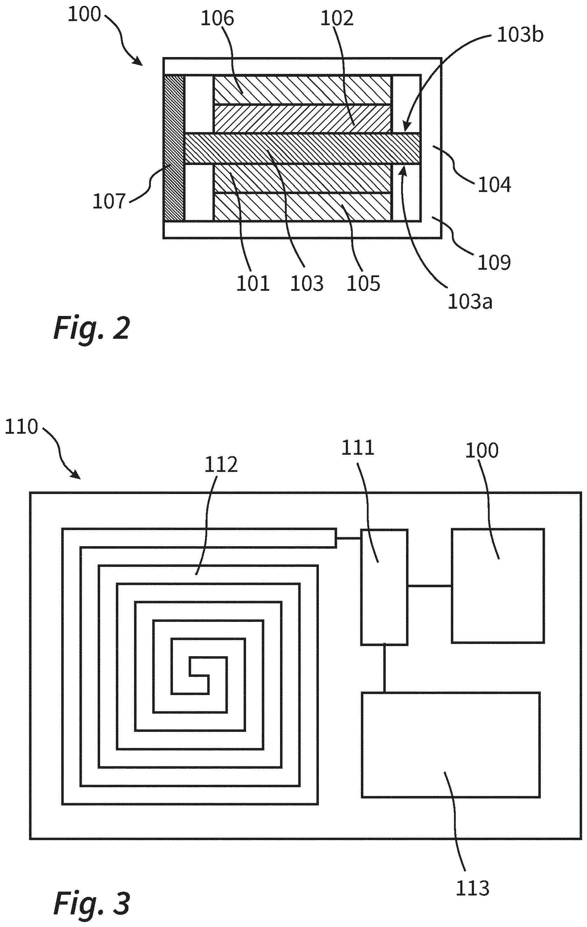

Das in Fig. 3 dargestellte Funketikett 110 umfasst neben der Batterie 100 eine Sende- und/oder Empfangseinheit 111 zum Senden und/oder Empfangen von Funksignalen, eine Sensorik 113 und eine mit der Sende- und/oder Empfangseinheit 110 gekoppelte Antenne 112. Die Komponenten des Funketiketts sind über eine Leiterstruktur miteinander verbunden. Auf der Unterseite des Etiketts 110 kann eine Klebeschicht (nicht dargestellt) angeordnet sein, mittels der das Funketikett 110 an einem Produkt fixiert werden kann.

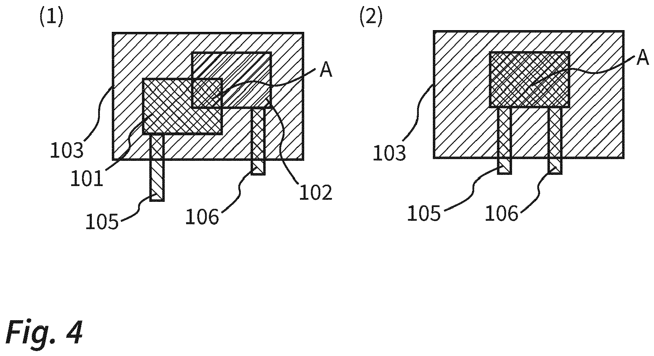

In Fig. 4 sind Beispiele eines Schichtstapels dargestellt, bei dem ein als Schicht ausgebildeter Separator 103 zwischen der als Schicht ausgebildeten Anode 101 und der als Schicht ausgebildeten Kathode 102 angeordnet ist. Die Anode 101 und die Kathode 102 sind jeweils rechteckig ausgebildet und bedecken jeweils die gleiche Fläche auf dem Separator 103. Alle Schichten sind in der Zeichnung parallel zur Zeichenebene angeordnet. Die Fläche des Separators 103, die von der Anode 101 bedeckt wird, ist in der vorstehenden Beschreibung als erste Kontaktfläche definiert. Die Fläche des Separators 103, die von der Kathode 102 bedeckt wird, ist in der vorstehenden Beschreibung als zweite Kontaktfläche definiert.

In Fig. 4 (1) sind die Anode 101 und die Kathode 102 versetzt zueinander angeordnet, so dass die erste und die zweite Kontaktfläche einander in Blickrichtung senkrecht zur Zeichenebene und damit senkrecht zu dem Separator 103 nur teilweise überlagern. Der Überlagerungsbereich A ist daher kleiner als die Flächen, die die Anode 101 und die Kathode 102 auf dem Separator 103 bedecken.

In Fig. 4 (2) überlagern sich die Anode 101 und die Kathode 102 dagegen vollständig. Die Größe des Überlagerungsbereichs A entspricht daher exakt der Fläche der Anode 101 und der Kathode 102.

Eine vollständige Überlagerung der Elektroden, wie in Fig. 4 (2) dargestellt, ist im Hinblick auf eine hohe Strombelastbarkeit von Vorteil.

**Patentansprüche**

1.   Gedruckte Batterie (100), welche insbesondere zur Versorgung einer Sende- und/oder Empfangseinheit (111) eines Funketiketts (110) mit einem elektrischen Strom von in der Spitze $\geq$ 400 mA dient, mit den Merkmalen

a. Sie umfasst einen Schichtstapel (108) mit

• einer als Schicht ausgebildeten Anode (101), die als Elektrodenaktivmaterial partikuläres metallisches Zink oder eine partikuläre metallische Zinklegierung und ein erstes elastisches Bindemittel oder Bindemittelgemisch enthält, und

• einer als Schicht ausgebildeten Kathode (102), die als Elektrodenaktivmaterial ein partikuläres Metalloxid, mindestens ein Leitfähigkeitsadditiv zur Optimierung der elektrischen Leitfähigkeit der Kathode (102), und ein zweites elastisches Bindemittel oder Bindemittelgemisch enthält, und

• einem als Schicht ausgebildeten Separator (103), der die Anode (101) und die Kathode (102) elektrisch voneinander isoliert, und

b. Sie umfasst einen ersten elektrischen Leiter (105), der mit der Anode (101) in unmittelbarem Kontakt steht, sowie einen zweiten elektrischen Leiter (106), der mit der Kathode (102) in unmittelbarem Kontakt steht, und

c. Sie umfasst ein Gehäuse (109), das den Schichtstapel (108) umschließt, sowie den weiteren Merkmalen

d. Der Separator (103) ist zwischen der Anode (101) und der Kathode (102) angeordnet und umfasst eine erste Seite (103a) und eine zweite Seite (103b), von denen die erste Seite (103a) eine erste Kontaktfläche zur Anode (101) und die zweite Seite (103b) parallel dazu eine zweite Kontaktfläche zur Kathode (102) umfasst, und

e. Die Kontaktflächen überlagern einander in Blickrichtung senkrecht zu dem als Schicht ausgebildeten Separator (103) in einem Überlagerungsbereich A, in welcher eine Gerade senkrecht zu dem Separator (103) beide Kontaktflächen schneidet,

**gekennzeichnet durch** eine Kombination der folgenden zusätzlichen Merkmale

f. Der Überlagerungsbereich A weist eine Mindestgröße von 17,3 cm$^2$ auf, und

g. Die Kathode (102) enthält das partikuläre Metalloxid, bezogen auf das Gesamtgewicht der festen Bestandteile der Kathode (102), in einem Anteil von 10 Gew.-% bis 90 Gew.-%, und

h. Die Kathode (102) enthält das zweite elastische Bindemittel oder Bindemittelgemisch, bezogen auf das Gesamtgewicht der festen Bestandteile der Kathode (102), in einem Anteil von 1 Gew.-% bis 25 Gew.-%, und

i. Die Kathode (102) enthält das mindestens eine Leitfähigkeitsadditiv, bezogen auf das Gesamtgewicht der festen Bestandteile der Kathode (102), in einem Anteil von 2,5 Gew.-% bis 35 Gew.-%.

2. Gedruckte Batterie nach Anspruch 1 mit den folgenden zusätzlichen Merkmalen:

a. Der Gesamtanteil G des partikulären Metalloxids und des mindestens einen Leitfähigkeitsadditivs in der Kathode (102) liegt im Bereich des 0,85- bis 0,95-fachen des Gesamtgewichts der festen Bestandteile der Kathode (102).

b. Das Verhältnis des Gewichtsanteils des partikulären Metalloxids zum Gewichtsanteil des mindestens einen Leitfähigkeitsadditivs in der Kathode (102) liegt im Bereich von 20:1 bis 5:1.

c. Für das Verhältnis der Größe des Überlagerungsbereichs A [cm2] zum Gesamtanteils G gilt die folgende Bedingung:

$$x\,[\mathrm{cm}^2] * 0{,}95 \leq A\,[\mathrm{cm}^2] * G$$

3. Gedruckte Batterie nach Anspruch 1 oder nach Anspruch 2 mit den folgenden zusätzlichen Merkmalen:

a. Die Kathode (102) enthält als Leitfähigkeitsadditiv mindestens ein kohlenstoffbasiertes Material, insbesondere aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs).

b. Die Kathode (102) enthält das mindestens eine kohlenstoffbasierte Material in einem Anteil im Bereich von 2,5 Gew.-% bis 35 Gew.-%.

4. Gedruckte Batterie nach Anspruch 1 oder nach Anspruch 2 mit den folgenden zusätzlichen Merkmalen:

a. Die Kathode (102) enthält als Leitfähigkeitsadditiv mindestens ein wasserlösliches Salz.

b. Die Kathode (102) enthält das mindestens eine wasserlösliche Salz in einem Anteil im Bereich von 1 Gew.-% bis 25 Gew.-%.

5. Gedruckte Batterie nach einem der vorhergehenden Ansprüche mit einem der folgenden zusätzlichen Merkmale:

a. Die Kathode (102) enthält als partikuläres Metalloxid Manganoxid.

b. Die Kathode (102) enthält als partikuläres Metalloxid Silberoxid.

6. Gedruckte Batterie nach einem der vorhergehenden Ansprüche mit mindestens einem der folgenden zusätzlichen Merkmale:

a. Die Anode (101) enthält als erstes elastisches Bindemittel oder Bindemittelgemisch mindestens ein Mitglied aus der Gruppe mit Cellulose und deren Derivate, Polyacrylate (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.

b. Die Kathode (102) enthält als zweites elastisches Bindemittel oder Bindemittelgemisch mindestens ein Mitglied aus der Gruppe mit Cellulose und deren Derivate, Polyacrylate (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.

c. Das erste und das zweite elastische Bindemittel oder Bindemittelgemisch sind stofflich identisch.

7. Gedruckte Batterie nach Anspruch 5 mit den folgenden zusätzlichen Merkmalen:

a. Die Kathode (102) enthält als partikuläres Metalloxid ein Metalloxid aus der Gruppe mit Manganoxid und Silberoxid.

b. Die Kathode (102) enthält als Leitfähigkeitsadditiv mindestens ein wasserlösliches Salz.

c. Die Kathode (102) enthält das mindestens eine wasserlösliche Salz in einem Anteil im Bereich von 1 Gew.-% bis 25 Gew.-%.

d. Die Kathode (102) enthält als zweites elastisches Bindemittel oder Bindemittelgemisch eine Kombination aus Carboxymethylzellulose und SBR.

8. Gedruckte Batterie nach einem der vorhergehenden Ansprüche mit mindestens einem der folgenden zusätzlichen Merkmale:

a. Sie umfasst einen wässrigen Elektrolyten, der ein chloridbasiertes Leitsalz enthält,

b. Der Separator (103), der zwischen der Anode und der Kathode angeordnet ist, ist mit dem Elektrolyten getränkt.

9. Gedruckte Batterie nach einem der Ansprüche 1 bis 7 mit dem folgenden zusätzlichen Merkmal:

a. Der Separator ist ein Festelektrolyt.

10. Gedruckte Batterie nach einem der vorstehenden Ansprüche mit dem folgenden zusätzlichen Merkmal:

a. Die Batterie umfasst als ersten und/oder als zweiten elektrischen Leiter (105, 106) eine Leiterbahn aus Metallpartikeln, insbesondere aus Silberpartikeln oder aus Partikeln aus einer Silberlegierung.

11. Funketikett (110) umfassend auf einem Träger 104 eine Sende- und/oder Empfangseinheit (111) zum Senden und/oder Empfangen von Funksignalen sowie eine auf den Träger (104) angeordnete gedruckte Batterie (100) zur Versorgung der Sende- und/oder Empfangseinheit (111) mit einem elektrischen Strom von in der Spitze $\geq$ 400 mA, wobei die Batterie (100) nach einem der vorhergehenden Ansprüche ausgebildet ist.

12. Verfahren zur Herstellung einer gedruckte Batterie (100), welche zur Versorgung einer Sende- und/oder Empfangseinheit (111) eines Funketiketts (110) mit einem elektrischen Strom von in der Spitze $\geq$ 400 mA dient, mit den Schritten

a. Drucken eines ersten elektrischen Leiters (105) auf einen elektrisch nicht leitenden Träger (104) und eines zweiten elektrischen Leiters (106) auf einen elektrisch nicht leitenden Träger (104), und

b. Drucken einer Anode (101) als Schicht unmittelbar auf den ersten elektrischen Leiter (105), wobei eine Druckpaste zum Einsatz kommt, die partikuläres metallisches Zink oder eine partikuläre metallische Zinklegierung und ein erstes elastisches Bindemittel oder Bindemittelgemisch enthält, und

c. Drucken einer Kathode (102) als Schicht unmittelbar auf den zweiten elektrischen Leiter (106), wobei eine Druckpaste zum Einsatz kommt, die ein partikuläres Metalloxid, mindestens ein Leitfähigkeitsadditiv zur Optimierung der elektrischen Leitfähigkeit der Kathode, und ein zweites elastisches Bindemittel oder Bindemittelgemisch enthält, wobei

• die Druckpaste das partikuläre Metalloxid, bezogen auf das Gesamtgewicht ihrer festen Bestandteile, in einem Anteil von 10 Gew.-% bis 90 Gew.-% enthält, und

• die Druckpaste das zweite elastische Bindemittel oder Bindemittelgemisch, bezogen auf das Gesamtgewicht ihrer festen Bestandteile, in einem Anteil von 1 Gew.-% bis 15 Gew.-% enthält, und

• die Druckpaste das mindestens eine Leitfähigkeitsadditiv, bezogen auf das Gesamtgewicht ihrer festen Bestandteile, in einem Anteil von 2,5 Gew.-% bis 35 Gew.-% enthält, und

d. Drucken oder Auflegen eines als Schicht ausgebildeten Separators (103) auf die Anode (101) und/oder die Kathode (102), und

e. Bilden eines Schichtstapels (108) mit der Sequenz Anode / Separator/ Kathode, in dem

• der Separator (103) zwischen der Anode (101) und der Kathode (102) angeordnet ist und eine erste und eine zweite Seite umfasst, von denen die erste Seite eine erste Kontaktfläche zur Anode (101) und die zweite Seite parallel dazu eine zweite Kontaktfläche zur Kathode (102) umfasst, und
• die Kontaktflächen einander in Blickrichtung senkrecht zu dem als Schicht ausgebildeten Separator (103) in einem Überlagerungsbereich, in welcher eine Gerade senkrecht zu dem Separator beide Kontaktflächen schneidet, überlagern, und
• der Überlagerungsbereich A eine Mindestgröße von 17,3 cm$^2$ aufweist.

13. Verfahren nach Anspruch 12 mit den folgenden zusätzlichen Merkmalen und / oder Schritten:

a. Als partikuläres Metalloxid wird Manganoxid verwendet.
b. Der erste und/oder der zweite Leiter (105, 106) werden, bevor die Anode (101) und die Kathode (102) gedruckt werden, mit einer elektrisch leitenden Carbonschicht (114) überdruckt.

14. Verfahren nach Anspruch 12 oder nach Anspruch 13 mit mindestens einem der folgenden zusätzlichen Merkmale und / oder Schritte:

a. Vor und/oder nach dem Drucken oder Auflegen des als Schicht ausgebildeten Separators (103) werden die Anode (101) und die Kathode (102) mit einem flüssigen Elektrolyten getränkt.
b. Vor dem Tränken mit dem flüssigen Elektrolyten wird auf dem Träger (104) ein Siegelrahmen (107) gebildet oder angeordnet, der die Anode (101) und die Kathode (102) umschließt.

15. Verfahren nach einem der Ansprüche 12 bis 14 mit dem folgenden zusätzlichen Schritt:

a. Der erste und der zweite elektrische Leiter (105, 106) werden nebeneinander auf denselben Träger (104) gedruckt.
b. Aus dem Träger (104) wird nach dem Umschlagen durch Verschweißung und/oder Verklebung ein geschlossenes Behältnis (109) gebildet, in dem der Schichtstapel (108) angeordnet ist.

Fig. 1

**Fig. 2**

**Fig. 3**

(1)

A

103

101

105

106

102

(2)

A

103

105

106

# Fig. 4

**Europäisches Patentamt**
**European Patent Office**
**Office européen des brevets**

# EUROPÄISCHER RECHERCHENBERICHT

**Nummer der Anmeldung**

EP 19 21 9567

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 2017 0098004 A (FLEXPOWER CO LTD [KR]) 29. August 2017 (2017-08-29) | 1-6, 10-15 | INV. H01M6/04 |
| Y | * Absätze [0051], [0058], [0084], [0086], [0091], [0101]; Abbildungen 1-6 * | 7-9 | H01M6/12 H01M6/40 H01M4/24 H01M4/26 |
| | ----- | | |
| Y,D | DE 10 2010 018071 A1 (VARTA MICROBATTERY GMBH [DE]) 20. Oktober 2011 (2011-10-20) * Absatz [0027] - Absatz [0029] * * Absatz [0031] - Absatz [0034] * * Absatz [0010] * | 8,9 | H01M4/34 H01M4/38 H01M4/42 H01M4/50 H01M4/54 H01M4/62 |
| | ----- | | |
| Y | EP 3 220 446 A1 (TOSHIBA KK [JP]) 20. September 2017 (2017-09-20) * Absatz [0132] * | 7 | H01M4/66 G06K19/07 G06K19/077 G06Q10/08 |
| | ----- | | |

**RECHERCHIERTE SACHGEBIETE (IPC)**

H01M
G06K
G06Q

Der vorliegende Recherchenbericht wurde für alle Patentansprüche erstellt

| Recherchenort | Abschlußdatum der Recherche | Prüfer |
|---|---|---|
| München | 22. Juni 2020 | Steinreiber, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 21 9567

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-06-2020

| Im Recherchenbericht angeführtes Patentdokument | Datum der Veröffentlichung | Mitglied(er) der Patentfamilie | Datum der Veröffentlichung |
|---|---|---|---|
| KR 20170098004 A | 29-08-2017 | KEINE | |
| DE 102010018071 A1 | 20-10-2011 | DE 102010018071 A1 | 20-10-2011 |
| | | EP 2561564 A1 | 27-02-2013 |
| | | WO 2011131627 A1 | 27-10-2011 |
| EP 3220446 A1 | 20-09-2017 | CN 107204482 A | 26-09-2017 |
| | | EP 3220446 A1 | 20-09-2017 |
| | | JP 6605996 B2 | 13-11-2019 |
| | | JP 2017168341 A | 21-09-2017 |
| | | KR 20170108821 A | 27-09-2017 |
| | | US 2017271714 A1 | 21-09-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019145224 A1
- US 2010081049 A1
- EP 2561564 B1
- EP 3477727 A1
- EP 2960967 B1